# EUROPEAN PATENT APPLICATION

(11) **EP 4 075 366 A1**
(43) Date of publication of application: **19.10.2022**
(21) Application number: 20900549.5
(22) Date of filing: 08.07.2020
(51) Int. Cl.: G06Q 30/00

(54) **METHOD AND SYSTEM FOR CREDITING A REWARD TO AN ELECTRONIC WALLET ACCOUNT**

(30) Priority: 09.12.2019 MX 2019014846
(71) Applicant: Todito Pagos, S.A. de C.V., Nuevo León, 66260 (MX)
(72) Inventor: SALINAS PLIEGO, Guillermo Eduardo, Nuevo León, 66260 (MX)
(74) Representative: Elzaburu S.L.P.
(86) International application number: PCT/IB2020/056430
(87) International publication number: WO 2021/116782

(57) **Abstract**

A method and system for crediting a reward to an electronic wallet account, wherein an electronic wallet account is pre-established for a user who has a pre-authorized electronic device with an electronic wallet application module, a reward application module and an image processing application module. A table of identifiers associated with a reward is pre-established, and the identifier is encoded in an image to be shown on a product. A registration of the user as a participant in a campaign is pre-established. Identifier information contained in an image captured by the electronic device is received, and it is determined whether the identifier information is in the table of identifiers. The reward associated with the user's electronic wallet account is credited, the identifier is removed from the table of identifiers, and notification of the crediting of the reward is provided.

## Description

### TECHNICAL FIELD OF THE INVENTION

The current invention is related, in a general view, to a method and system for managing and crediting an economic reward in a digital way, specifically, it is referred to a method and system for crediting in real time an electronic reward in an electronic wallet account from the capture of a coded image associated with the reward.

### BACKGROUND OF THE INVENTION

Currently, coupons and vouchers, either physically or electronically, that promotes discounts more commonly used by businesspeople, brands, and companies to increase and promote their sales of products or services. Generally, this coupons and vouchers, offer a determined discount percentage in a good or service acquisition. Generally, the coupon or voucher, is presented and accepted before the purchase of a good or service is completed to obtain the final discount price. These coupons or physical vouchers are exchanged in a point of sales (POS) by scanning or capturing an encoded image, generally in a bar code or quick response code, that is found in the coupon or voucher. Once the information contained in the coded image enters to the point of sales, transaction amount updates and it's displayed the new amount of the transaction with the discount indicated in the coupon or voucher.

Practical example to exchange an electronic coupon in a point of sales, where the electronic coupon is displayed in an electronic mobile device, it is described in the US patent application publications US2003/0233276A1 and US2015/0379552A1 which are incorporated herein by reference.

The above is inconvenient for many costumers, because the costumer it is forced to look for coupon or physical voucher or download it in an electronic way in its electronic mobile device, even when several costumers feel embarrassed and upset to present the coupon or physical or electronic voucher in advance at the time of purchasing the product or service. Some costumers may forget the coupon or voucher, so this would make a negative experience to the costumer. On the other side, the coupon or physical or electronic voucher in a general way it is not unrepeatable and would a be a reason that several costumers may have access to that coupon o voucher.

On another topic, US Patent Application Publication US2013/0110607A1, incorporated to this document as a reference, describes a method and system to generate, authenticate and validate a credit coupon or refund to a costumer, the method consists, in the first place, complete a transaction (acquisition of a good or service) in a point of sales (POS), the point of sales in a connection with a electronic coupon generator server determinates if the transaction qualifies for a credit or refund, and if it is the case, it generates a electronic coupon in a encoded image in a quick response format which is previously associated to a credit or refund, the point of sale prints the encoded image in the receipt of the transaction which allows the costumer to capture it with his electronic mobile device, sending the coupon information to the electronic coupon generator server, which authenticates the coupon and it gives the order to a bank institution to validate the credit or to refund a determined amount or to order the point of sales to give the determined cash to the costumer, once is accredited the electronic voucher is marked as processed.

The previous assertion presents the following drawbacks (i) the costumer must buy a product or consume service, (ii) the costumer must be in the point of sale and right there make the application to ask to be validate the credit or the refund that is marked in the electronic coupon, and (iii) is necessary to implement an interface, may be between the point of sale and the bank institution or between the coupon generator server and the bank institution, to be able to validate the credit or refund the marked in the costumer electronic coupon.

In another assertion, the US patent US-9,262,769B2 describes a very abstract way to validate an economic compensation to a user, this method has in the first place an assignation of the economic value to a coupon that may be readable by a machine (example, QR code or barcode), this code may be readable and its located in the package of the product; an user captures the readable code with his digital portable device adapted for readable code reading; after this a communication with a remote server is established to validate if the readable coupon has already been captured; and it assigns the user the economic compensation associated to the readable code. The inconvenient of this assertion is that it is not described, nor grounded, which network, or nods will interact, and it not established how and when the economic compensation will be assigned to the user.

The present invention addresses the limitations that has been experimented with the coupons of physical or electronic discount vouchers, with credit electronic coupons or refund and how and when to assign a user to an economic compensation. It's necessary to offer a method and system to validate an economic reward in a user electronic wallet account, where (i) the economic reward do not depend in the acquisition of a product or a consumer service, where it suffices only to have access to an encoded image in a consumer product or service, where the encoded image is any part of the consumer product or its packaging that identifies or implies that the consumer product is about to be consumed or has been consumed. (ii) the economic reward may not depend on having access to a point of sales, it means that, the user may apply for the economic reward validation anywhere and anytime with his electronic device, without the need of a terminal o equipment, or to be in a specific location; and (iii) that the validation of the economic reward may not depend on the bank system o the access to a bank system, only with the use of the electronic wallet system.

The present invention allows the user to participate immediately in an advertising campaign and instantly validate the economic reward associated to his account in an electronic wallet. This invention may also allow the producers, suppliers or distributors of a product or consumer service to stamp directly in his products or consumer services the encoded image associated to the economic reward without depending in a third party. Likewise, this invention allows the producers, suppliers or distributors of a product or consumer service be in an easy and effective way sponsors of an incentives campaign without being associated or to be requiring links to complex systems as the banks system.

### SUMMARY OF THE INVENTION

In the view of the aforementioned and with the purpose of solving the founded limitations, the invention has as object to offer a method for crediting a reward to an electronic wallet account, the method includes the steps of: (a) pre-establishing, in an electronic wallet server, an electronic wallet account associated to an user, the user has an electronic device; (b) pre-enabling the electronic device of the user with an electronic wallet application module; (c) pre-establishing, in a reward server in communication with the electronic wallet server, a reward unique identifier table, each reward unique identifier is associated with an economic reward, and the reward unique identifier is encoded in an encoded image to be displayed in a consumable product or service; (d) pre-establishing, in the reward server, an user record as a participant in an incentive campaign; (e) pre-enabling the electronic device of the user with a reward application module and an image processing application module; (f) receiving, in the reward server, information of the reward unique identifier included in an encoded image captured by the electronic device of the user, using the reward application module and the image processing application module, the encoded image is displayed in a consumable product or service that the user has had access; (g) determining, in the reward server, if the information received of the reward unique identifier is found in the pre-established reward unique identifier table; and under the determination that the received information of the reward unique identifier is found in the pre-established reward unique identifier table, then: (h) ordering the reward server to the electronic wallet server to credit the economic reward associated to the reward unique identifier found to the electronic wallet account associated to the user; (i) deleting, the reward server, the reward unique identifier found in the pre-established reward unique identifier table; and (j) notifying, the electronic wallet server, the accreditation of the reward in the electronic wallet account associated to the user through the electronic wallet application module of the electronic device of the user.

This invention also contemplates a system for crediting a reward to an electronic wallet account using the above indicated method, the system has an electronic wallet server to pre-establish an electronic wallet account associated to an user; a reward server in communication with the electronic wallet server to pre-establish a reward unique identifier table and an user record as a participant in an incentive campaign, each reward unique identifier is associated with an economic reward, and the reward unique identifier is encoded in an encoded image to be displayed in a consumable product or service; and the electronic wallet server and the reward server is in communication with an electronic device of the user, wherein the electronic device is pre-enabled with an electronic wallet application module, a reward application module and a image processing application module

### BRIEF DESCRIPTION OF THE FIGURES

The characteristic details of the invention are described in the following paragraphs together with the accompanying figures, which are for the purpose of defining the invention but without limiting the scope thereof.
Figure 1 illustrates a system for crediting a reward to an electronic wallet in accordance with the invention.
Figure 2 illustrates a flow chart of a method for crediting a reward to an electronic wallet in accordance with the invention.

### DETAILED DESCRIPTION OF THE INVENTION

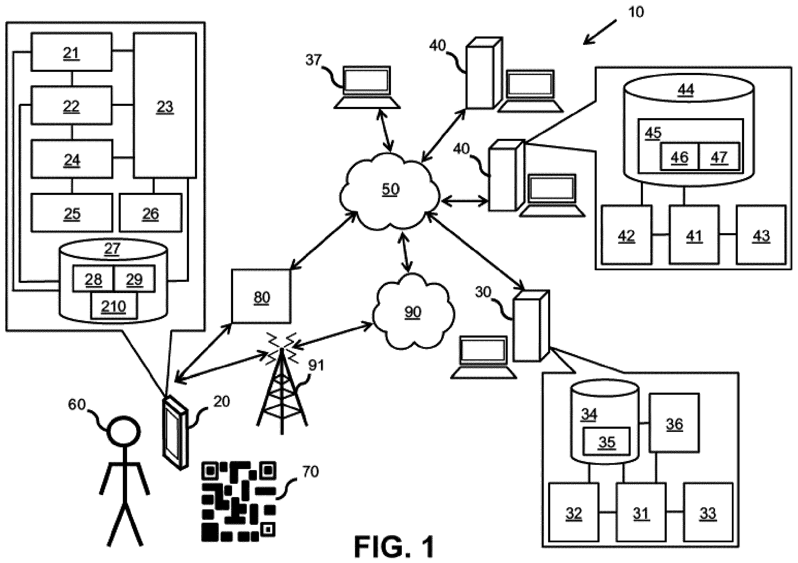

Figure 1 illustrates a system **10** for crediting a reward to an electronic wallet in accordance with the invention. The system **10** consists of an electronic device **20,** a reward server **30** and one or more electronic wallet servers **40** in communication over a network **50.**

The electronic device **20** is associated to a user **60** and has at least a processing unit (not shown). The electronic device **20** may be a personal computer, a mobile device (example, a cellphone, a smartphone, a laptop, a table, a digital personal assistant, a videogame device, a tracker device of GPS) or another proper technology that allows the user **60** interact with the reward server **30** and the electronic wallet server **40.** The electronic device **20** can have access to the network **50** using a wired or wireless router **80** or using a cellphone network **90** via a base radio **91.**

The user **60** may use the electronic device **20** to download an electronic wallet application module **21** from the electronic wallet server **40** and a reward application module **22** from the reward server **30** and install them in the electronic device **20.** The electronic wallet application module **21** and the reward application module **22** interact with a communication module **23** in the electronic device **20** to transmit and/or receive data to or from the electronic wallet server **40** and/or the reward server **30,** respectively.

Through the electronic wallet application module **21,** the user **60** can create and register an electronic wallet account **46** in the electronic wallet server **40,** obtaining an electronic wallet user identifier to thus access the electronic wallet services provided by an electronic wallet service provider through interactions between the electronic wallet server **40** and the electronic wallet application module **21** installed in the electronic device **20.** The term "electronic wallet" is known in the state of the art and can be used by a user **60** associated with an electronic wallet account to carry out an electronic transaction. In general, the electronic wallet has a data or information component associated with user **60** and transaction data, including payment methods, shipping addresses, billing address, and other information, such as the geographic location where redemption was made, in addition to the time and date. The information component is associated with a user interface for user **60** to access the electronic wallet to enter the necessary information for the transaction. The electronic wallet is also associated with a software or services component to authorize and complete the electronic transaction, including the security and encryption of the personal information of user **60** and the real electronic tra nsaction.

The electronic wallet application module **21** can encompass any application, hardware, software, or process that the electronic device **20** can employ to assist user **60** in completing any electronic transaction of the electronic wallet related to his electronic wallet account.

Through the reward application module **22,** the user **60** can create and register a user account on the reward server **30** to be able to participate or be affiliated with an incentive campaign promoted by a producer, supplier or distributor of a consumable product or service. By downloading and installing the reward application module **22** on the electronic device **20,** the user obtains a participating user identifier in order to have access to the reward accreditation services provided by an incentive campaign service provider through interactions between the reward server **30** and the reward application module **22** installed on the electronic device **20.**

The reward application module **22** interacts with an image processing application module **24** in the electronic device **20.** The image processing application module **24** can include any application, hardware, software, or process that the electronic device **20** can employ to assist the user **60** to capture and decode an encoded image. The image processing application module **24** can interact with a scanner or camera **25** included in the electronic device **20** or can be incorporated as a complementary application of the scanner or camera **25.** As a complementary application, the image processing application module **24** is executed within an application of the scanner or camera **25.**

Also, the reward application module **22** can interact with the electronic wallet application module **21** or can be incorporated as a complementary application to the electronic wallet application module **21.** As a complementary application, the reward application module **22** is executed inside the electronic wallet application module **21.**

The image processing application module **24** receives an encoded image **70** captured by the scanner or camera **25** in the electronic device **20** and processes the encoded image **70** to decode the data found therein. The encoded image **70** may be represented in a code format that contains encrypted information regarding a reward unique identifier, and additionally information regarding an associated consumable product or service, a producer, supplier or distributor of the consumable product or service, and/or an incentive campaign associated with the consumable product or service. The image processing application module **24** may contain software to decode the code of the encoded image **70.**

In the context of the present description, the term "code" means a symbol structure that contains encrypted information, capable of being readable when captured or read by an optical electronic reader designed for such purpose or a camera enabled for such purpose. The code can be one-dimensional (for example, a simple linear or stacked linear barcode, the latter for example the PDF417 barcode from the company Symbol Technologies), bi-dimensional (for example, a data matrix code, created by the company RVSU Acuity CiMatriz; a MaxiCode code, created by the company UPS; or a quick response code QR, created by the Denso-Wave company from Japan) or three-dimensional at any given time.

The encoded image **70** is associated with a unit of a consumable product or service and can be displayed in various forms that allow the user **60** to scan or photograph the encoded image **70** using their electronic device **20.** In a first embodiment, the encoded image **70** can be printed or stamped on a consumable product, either packaged or packaged, and whose producer or distributor is promoting an incentive campaign; preferably, the encoded image **70** will be printed or stamped on any part of the consumer product that identifies or implies that the consumable product is about to be consumed or has been consumed (for example, that the packaging of the consumer product is opened) that is, it can be printed or stamped, for example inside the packaging, on the same product, behind the labeling, inside a screw cap or crown cap in the case of a packaged product, on a separate label contained inside the packaging. In a second embodiment, the encoded image **70** may be printed on a consumer receipt or displayed on a screen when a consumable product or service has been consumed or purchased on-site, in bulk, or dispatchable, either through a commercial establishment (for example, a restaurant, a bakery) or a service station (for example, a gas station), and whose producer, service provider or distributor is promoting an incentive campaign; in such a way, for example that at the time of consuming food in a restaurant, the encoded image **70** can be printed on the consumption receipt or displayed on a screen; or when filling gasoline at a service station, the coded image **70** may be displayed on the screen of the service pump or on a separate screen therefrom. In a third embodiment, the encoded image **70** can be displayed on the screen of a web browser when a consumer product or service has been purchased or consumed online, and whose producer, service provider or distributor is promoting an incentive campaign associated with the consumable product or service.

The information decoded by the image processing application module **24** relating to the captured encoded image **70** is transmitted to the reward server **30** via the network **50** through the communication module **23** in the electronic device **20.**

In one embodiment, the electronic wallet application module **21** and the reward application module **22** can be in the same application or embedded in a web browser application module in the electronic device **20.**

The electronic device **20** may further include other application modules **26** as desired in particular embodiments to provide desired features to electronic device **20.** For example, such other application modules **26** may include security applications to implement user-side security features, programmatic client applications to interface with appropriate application programming interfaces (APIs) across the network **50** or other types of applications. The application modules **26** may also include email and text message applications that allow the user **60** to send and receive email and text over the network **50.**

The electronic device **20** also includes a data storage unit **27** accessible by the electronic wallet application module **21,** the reward application module **22** and the communication module **23.** The example data storage unit **27** may include one or more computer readable storage devices. The data storage unit **27** can be integrated into electronic device **20** or can be logically coupled to electronic device **20.** For example, data storage unit **27** can include integrated flash memory and/or one or more removable memory cards or memory removable flash.

In the data storage unit **27** is stored an electronic wallet user identifier **28** associated with the user **60** and which was obtained from the electronic wallet server **40,** and a participant user identifier **29** associated with the user **60** and which was obtained from the reward server **30.** Also, the data storage unit **27** may store an electronic wallet service provider identifier **210** that identifies the electronic wallet service provider serving user **60,** the electronic wallet service provider identifier **210** may be obtained from the electronic wallet server **40** upon download and installation of the electronic wallet application module **21** in the electronic device **20.**

An incentive campaign service provider manages the reward server **30.** The reward server **30** includes a processing unit **31** for executing software routines, and at least one communication interface **32** that allows data transfer and reception between the reward server **30** and one or more electronic devices **20,** and between the reward server **30** and one or more electronic wallet servers **40** using one or more application programming interfaces (APIs) **33** via network **50.** The reward server **30** covers or is in communication with a database data **34** that stores a reward unique identifier table **35** containing a list of reward unique identifiers associated with an incentive campaign sponsor, which can typically be a producer, supplier, or distributor of a consumable product or service, and where each reward unique identifier is associated with an economic reward sponsored by the sponsor of said incentive campaign.

The economic reward associated with a reward unique identifier to be credited to the electronic wallet account of the user **60** will be debited from an electronic wallet hub account owned by the sponsor of an incentive campaign or the incentive campaign service provider, for what the sponsor of an incentive campaign or incentive campaign service provider should create and register an electronic wallet hub account **47** on the electronic wallet server **40** of any electronic wallet service provider, obtaining an electronic wallet user identifier to access the electronic wallet services provided by the electronic wallet service provider, so the reward unique identifier table **35** also contains the associated electronic wallet user identifier of the sponsor of an incentive campaign or of the incentive campaign service provider and an electronic wallet service provider identifier that identifies the electronic wallet service provider that services the incentive campaign sponsor or incentive campaign service provider.

The incentive campaign service provider, preferably through the reward server **30,** unrepeatably generates a list of reward unique identifiers by using any random generation technique. This list of reward unique identifiers is delivered to the sponsor of an incentive campaign, so that the sponsor in turn carries out the encoding of each reward unique identifiers in an encoded image **70,** and each encoded image **70** will be associated with a unit of a consumable product or service that the sponsor of an incentive campaign desires, said coded image **70** being displayed on the consumable product or service in any of several ways described above.

The reward server **30** may further comprise an incentive campaign rules module **36.** In the incentive campaign rules module **36,** one or more rules are pre-established that govern the accreditation of the economic rewards associated with a certain incentive campaign, these rules can be, for example, the validity of the incentive campaign and therefore the validity of the reward unique identifier, the user's compliance with a certain location or time, among others. Alternatively, the sponsor of an incentive campaign can remotely modify or define the rules that govern the accreditation of the economic rewards associated with a certain incentive campaign, by using a remote terminal **37** with access to the incentive campaign rules module **36** through network **50.** The remote terminal **37** may be a personal computer, a mobile device (example, a cell phone, smartphone, laptop, electronic tablet, or personal digital assistant (PDA).

An electronic wallet service provider manages the electronic wallet server **40.** The electronic wallet server **40** includes a processing unit **41** for executing software routines, and at least one communication interface **42** that allows data transfer between the electronic wallet server **40** and one or more electronic devices **20,** and between the electronic wallet server **40** and reward server **30** using one or more application programming interfaces (APIs) **43** through network **50.** The wallet server **40** comprises or is in communication with a database **44** which stores an electronic wallet account table **45** where the electronic wallet account **46** of the user **60** and the electronic wallet hub account **47** of the incentive campaign sponsor or incentive campaign service provider are located.

In one embodiment, both the reward server **30** and the electronic wallet server **40** can be implemented on the same server or node in a co-located environment, sharing hardware and software elements.

The network **50** may be a local area network (LAN), a wide area network (WAN), an intranet, the Internet, a storage area network (SAN), a personal area network (PAN), a metropolitan area network (MAN), a wireless local area network (WLAN), a virtual private network (VPN), a cellular network or other mobile communication network, Bluetooth, NFC, or any combination thereof or any other appropriate architecture or system that facilitates the communication of signals, data and/or messages between the electronic device **20,** the reward server **30** and the electronic wallet server **40.**

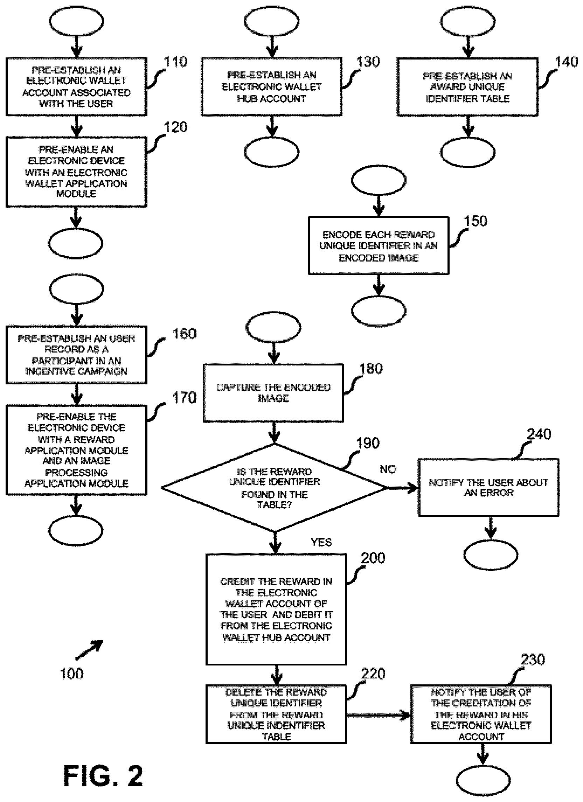

Now referring to Figure 2 and with the support of Figure 1, a flow chart of a method **100** for crediting a reward to an electronic wallet in accordance with the present invention is illustrated. In the step **110** it is pre-established, in the electronic wallet server **40,** an electronic wallet account **46** associated to the user **60** so, in the step **120,** it is pre-enabled the electronic device **20** of the user **60** with an electronic wallet application module **21,** and it is storage in the data storage unit **27** of the electronic device **20** the electronic wallet user identifier **28** associated to the user **60** and the electronic wallet service provider identifier **210,** both identifiers are obtained from the electronic wallet server **40.**

In the step **130** it is pre-established, in the electronic wallet server **40,** an electronic wallet hub account **47** belonging to an incentive campaign sponsor or incentive campaign service provider, obtaining an electronic wallet user identifier associated with an incentive campaign sponsor or incentive campaign service provider.

In the step **140** it is pre-established, in the reward server **30,** the reward unique identifier table **35,** such that each reward unique identifier is associated with an economic reward and a sponsor of an incentive campaign or an incentive campaign service provider, thus the reward unique identifier table **35** also included the electronic wallet user identifier associated to a sponsor of an incentive campaign or the incentive campaign service provider, and an electronic wallet service provider identifier that identifies the electronic wallet service provider that services the incentive campaign sponsor or the incentive campaign service provider.

In the step **150,** the reward unique identifier is encoded in an encoded image that will be displayed on an unit of a consumable product or service.

After that, in the step **160,** it's pre-established, in the reward server **30,** an user record **60** as a participant in the incentive campaign, so in the step **170,** the electronic device **20** of the user **60** is pre-enabled with a reward application module **22** and an image processing application module **24** and it is stored, in the data storage unit **27** of the device **20** the participant user identifier **29.**

One the electronic device **20** of the user **60** is enabled with the electronic wallet application module **21,** the reward application module **22** and the image processing application module **24,** any time, in the step **180,** the electronic device **20** is used by the user **60** to capture an encoded image **70** displayed in a consumable product or service that the user **60** has access before, so the reward unique identifier information contained in the encoded image **70** together with the electronic wallet user identifier **28** associated to the user **60,** the electronic wallet service provider identifier **210** and the participant user identifier **29** is transmitted by the electronic device **60** and received by the reward server **30,** so in the step **190,** is determined, in the reward server **30,** if the information of the reward unique identifier received is found in the reward unique identifier table **25** pre-established, and upon determination that the reward unique identifier information received if found in the pre-established reward unique identifier table, then in step **200,** the reward server **30** order to the electronic wallet server **40** (corresponding with the electronic wallet service provider identifier **210)** that credits the economic reward associated with the reward unique identifier found in the electronic wallet account **46** of the user **60** (corresponding with the electronic wallet user identifier **28)** and is debited the economic reward from the electronic wallet hub account **47;** in the step **220,** the reward server **30** deletes the reward unique identifier found in the reward unique identifier table **35** pre-established, and in the step **230,** the electronic wallet server **40** notifies the creditation of the reward in the electronic wallet account **46** of the user **60** via the electronic wallet application module **21** of the electronic device **20.**

In the case of the step **190** it will be determined that the information of the reward unique identifier received is not found in the reward unique identifier table pre-established, then, in step **240,** the reward server **30** notifies to the user **60** this situation with a message through the reward application module **22** of the electronic device **20,** indicating in the message that the code is associated to the encoded image **70** previously captures does not exist anymore or that has already been presented and validated in a previously occasion.

The steps **110** and **120,** the step **130,** the steps **140** and **150** and the steps **160** and **170** can be executed regardless of the execution order.

One of the main advantages of this method and system for crediting a reward to an electronic wallet, is that allows the user **60** to have great mobility to claim his reward, because the user **60** do not depends of being in a determined place or to interact with a determined point of sale or another equipment to be able to do it, because it is enough to have the encoded image **70** to the disposal of the user with a reward associated to apply for the creditation of the reward in the electronic wallet account.

Based on the embodiments described above, it is contemplated that the modifications of the described production environments, as well as the alternative realization environments will be considered obvious for a person skilled in the art of the technique under the present description. In this order of ideas, it is contemplated that the claims encompass such modifications and alternatives that are within the scope of the present invention or its equivalents.

## Claims

1. A method for crediting a reward to an electronic wallet account, the method comprising the steps:
pre-establishing, in an electronic wallet server, an electronic wallet account associated to an user, wherein the user has an electronic device;
pre-enabling the electronic device of the user with an electronic wallet application module;
pre-establishing, in a reward server in communication with the electronic wallet server, a reward unique identifier table, wherein each reward unique identifier is associated with an economic reward, and wherein the reward unique identifier is encoded in an encoded image to be displayed in a consumable product or service;
pre-establishing, in the reward server, an user record as a participant in an incentive campaign;
pre-enabling the electronic device of the user with a reward application module and an image processing application module;
receiving, in the reward server, information of the reward unique identifier included in an encoded image captured by the electronic device of the user, using the reward application module and the image processing application module, wherein the encoded image is displayed in a consumable product or service that the user has had access;
determining, in the reward server, if the information received of the reward unique identifier is found in the pre-established reward unique identifier table; and
under the determination that the received information of the reward unique identifier is found in the pre-established reward unique identifier table, then:
ordering the reward server to the electronic wallet server to credit the economic reward associated to the reward unique identifier found to the electronic wallet account associated to the user;
deleting, the reward server, the reward unique identifier found in the pre-established reward unique identifier table; and
notifying, the electronic wallet server, the accreditation of the reward in the electronic wallet account associated to the user through the electronic wallet application module of the electronic device of the user.

2. The method of claim 1, wherein the reward server and the electronic wallet server are co-located.

3. The method of claim 1, wherein the reward application module and the image processing application module are in the same application.

4. The method of claim 1, wherein the electronic wallet application module and the reward application module are in the same application.

5. The method of claim 1, wherein the electronic wallet application module, the reward application module and the image processing application module are in the same application.

6. The method of claim 1, wherein the encoded image is in a code format selected from a one-dimensional code, a bi-dimensional code, a three-dimensional code, and combinations thereof.

7. The method of claim 6, wherein the encoded image is in a quick response code format.

8. The method of claim 1, wherein the step of pre-establishing, in an electronic wallet server, an electronic wallet account associated to an user, wherein the user has an electronic device, further includes the step of pre-establishing, in an electronic wallet server, an electronic wallet hub account; and wherein the step of ordering the reward server to the electronic wallet server to credit the economic reward associated to the reward unique identifier found to the electronic wallet account associated to the user, includes the step of debiting of the electronic wallet hub account the economic reward.

9. The method of claim 1, wherein further includes the steps of:
pre-establishing, in the reward server, one or more rules governing the accreditation of the economic reward associated with a determined incentive campaign; and
validating, in the step of determining, in the reward server, if the information received of the reward unique identifier is found in the pre-established reward unique identifier table, if the pre-established rules are compliance.

10. A system for crediting a reward to an electronic wallet account according to method of claim 1, the system comprising:
an electronic wallet server to pre-establish an electronic wallet account associated to an user;
a reward server in communication with the electronic wallet server to pre-establish a reward unique identifier table and an user record as a participant in an incentive campaign, wherein each reward unique identifier is associated with an economic reward, and wherein the reward unique identifier is encoded in an encoded image to be displayed in a consumable product or service; and
wherein the electronic wallet server and the reward server is in communication with an electronic device of the user, wherein the electronic device is pre-enabled with an electronic wallet application module, a reward application module and an image processing application module.

11. The system of claim 10, wherein the reward server and the electronic wallet server are co-located.

12. The system of claim 10, where wherein the reward application module and the image processing application module are in the same application.

13. The system of claim 10, wherein the electronic wallet application module and the reward application module are in the same application.

14. The system of claim 10, wherein the electronic wallet application module, the reward application module and the image processing application module are in the same application.

15. The system of claim 10, wherein the electronic wallet server includes an electronic wallet hub account.

16. The system of claim 10, wherein the encoded image is in a code format selected from a one-dimensional code, a bi-dimensional code, a three-dimensional code, and combinations thereof.

17. The system of claim 16, wherein the encoded image is in a quick response code format.

18. The system of claim 10, wherein the reward server includes an incentive campaign rules module.
